# FASCICULE DE BREVET EUROPEEN

(11) **EP 4 149 782 B1**
(45) Date de publication et mention de la délivrance du brevet: **03.07.2024**
(21) Numéro de dépôt: 21719623.7
(22) Date de dépôt: 19.04.2021
(51) Int. Cl.: B60K 11/08, B60H 1/00, B60H 1/32

(54) **MODULE DE REFROIDISSEMENT POUR VÉHICULE AUTOMOBILE ÉLECTRIQUE OU HYBRIDE À TURBOMACHINE TANGENTIELLE**
KÜHLMODUL FÜR EIN ELEKTRO- ODER HYBRIDKRAFTFAHRZEUG MIT EINER TANGENTIALFLUSSTURBOMASCHINE
COOLING MODULE FOR AN ELECTRIC OR HYBRID MOTOR VEHICLE, COMPRISING A TANGENTIAL-FLOW TURBOMACHINE

(30) Priorité: 12.05.2020 FR 2004662
(43) Date de publication de la demande: 22.03.2023
(73) Titulaire: VALEO SYSTEMES THERMIQUES, 78320 Le Mesnil Saint-Denis (FR)
(72) Inventeur: DURBECQ, Gael, 93012 BOBIGNY - Cedex (FR); MAMMERI, Amrid, 93012 BOBIGNY - Cedex (FR); ETIENNE, Erwan, 93012 BOBIGNY - Cedex (FR); AZZOUZ, Kamel, 93012 BOBIGNY - Cedex (FR)
(74) Mandataire: Valeo Systèmes Thermiques
(86) Numéro de dépôt international: PCT/EP2021/060044
(87) Numéro de publication internationale: WO 2021/228495

(56) Documents cités:
- EP-A1- 2 875 979
- DE-A1-102011 013 856
- DE-B4-102011 013 856
- FR-A1- 3 057 814
- JP-A- 2001 090 538
- US-A1- 2005 023 057

## Description

La présente invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Le dispositif de ventilation permet ainsi, par exemple, de générer un flux d'air au contact de l'échangeur chaleur, à l'arrêt du véhicule ou à faible vitesse de roulage. Un module de refroidissement d'un type connu est divulgué par le document DE 10 2011 013856 A1.

Dans les véhicules automobiles à moteur thermique classique, le au moins un échangeur de chaleur est de forme sensiblement carrée, le dispositif de ventilation étant alors un ventilateur à hélice dont le diamètre est sensiblement égal au côté du carré formé par l'échangeur de chaleur.

Classiquement, l'échangeur de chaleur est alors placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement situé dans le passage du flux d'air traversant la baie de refroidissement supérieure.

Cependant, les véhicules électriques sont de préférence munis uniquement de baies de refroidissement situées sous le pare-chocs, de préférence encore d'une unique baie de refroidissement située sous le pare-chocs.

En effet, le moteur électrique n'a pas besoin d'être alimenté en air. Et la diminution du nombre de baies de refroidissement permet d'améliorer les caractéristiques aérodynamiques du véhicule électrique. Ceci se traduit également par une meilleure autonomie et une plus grande vitesse de pointe du véhicule automobile.

De manière générale, au moins un des échangeurs de chaleur est connecté à une pompe à chaleur ou à un circuit de climatisation apte à fonctionner dans un mode pompe à chaleur. Cet échangeur de chaleur peut alors fonctionner en tant qu'évaporateur afin d'absorber de l'énergie de l'air extérieur. Cependant par temps froid, l'humidité de l'air extérieur peut se condenser et givrer sur cet échangeur de chaleur. Cette couche de givre peut ainsi obstruer la circulation de l'air extérieur et diminuer l'efficacité de cet échangeur de chaleur.

Le but de la présente invention est donc de remédier au moins partiellement aux inconvénients de l'art antérieur et de proposer module de refroidissement amélioré permettant d'évacuer le givre pouvant s'accumuler sur un échangeur de chaleur fonctionnant en tant qu'évaporateur.

La présente invention concerne donc un module de refroidissement pour véhicule automobile électrique ou hybride, ledit module de refroidissement étant destiné à être traversé par un flux d'air et comportant :
- un ensemble d'échangeurs de chaleur comportant un premier échangeur de chaleur configuré pour absorber de l'énergie calorifique du flux d'air et un deuxième échangeur de chaleur configuré pour relâcher de l'énergie calorifique dans le flux d'air,
- un premier boîtier colleteur disposé en aval de l'ensemble d'échangeurs de chaleur dans le sens de circulation du flux d'air, ledit premier boîtier collecteur comportant une sortie du flux d'air,
- une turbomachine tangentielle configurée de sorte à générer le flux d'air, le module de refroidissement comportant en outre :
- une évacuation d'air disposée en aval de la sortie du flux d'air du premier boîtier collecteur, ladite évacuation d'air débouchant sur l'extérieur du véhicule, et
- une dérivation reliant l'évacuation d'air à une ouverture débouchant en amont de l'ensemble d'échangeurs de chaleur,
   l'évacuation d'air comportant un premier dispositif d'obturation mobile entre une première position dite d'évacuation et une deuxième position dite de recirculation, ledit premier dispositif d'obturation étant configuré pour rediriger le flux d'air en provenance de la sortie vers l'extérieur du véhicule dans sa position d'évacuation et pour rediriger ledit flux d'air vers la dérivation dans sa position de recirculation.

Selon un aspect de l'invention, en position d'évacuation, le premier dispositif d'obturation obture la dérivation.

Selon un autre aspect de l'invention, le module de refroidissement comporte en outre un deuxième boîtier collecteur disposé en amont de l'ensemble d'échangeurs de chaleur, ledit deuxième boîtier collecteur comportant une première entrée du flux d'air en provenance de l'extérieur du véhicule et une deuxième entrée du flux d'air en provenance de la dérivation formant l'ouverture de la dérivation.

Selon un autre aspect de l'invention, la deuxième entrée du deuxième boîtier collecteur comporte un deuxième dispositif d'obturation mobile entre une première position dite d'ouverture et une deuxième position dite de fermeture, le deuxième dispositif d'obturation étant configuré pour rediriger le flux d'air en provenance de la dérivation vers l'ensemble d'échangeurs de chaleur dans sa position d'ouverture et configuré pour obturer la deuxième entrée dans sa position de fermeture.

Selon un autre aspect de l'invention, la première entrée du flux d'air du deuxième boîtier collecteur comporte un dispositif d'obturation de face avant mobile entre une première position dite ouverte et une deuxième position dite d'obturation, le dispositif d'obturation de face avant étant configuré pour permettre au flux d'air en provenance de l'extérieur du véhicule de passer au travers ladite première entrée dans sa position ouverte et obturer ladite première entrée dans sa position d'obturation.

Selon un autre aspect de l'invention, l'ensemble d'échangeurs de chaleur comporte un troisième échangeur de chaleur configuré pour relâcher de l'énergie calorifique dans le flux d'air.

Selon un autre aspect de l'invention, le troisième échangeur de chaleur est disposé en amont du premier échangeur de chaleur.

Selon un autre aspect de l'invention, le deuxième échangeur de chaleur est disposé en aval du premier échangeur de chaleur.

Selon un autre aspect de l'invention, le premier boîtier collecteur comporte au moins un volet de décharge disposé en vis-à-vis de l'ensemble d'échangeurs de chaleur dans l'axe de circulation du flux d'air le traversant.

Selon un autre aspect de l'invention, l'évacuation d'air est disposée dans le même axe que la sortie du flux d'air du premier boîtier collecteur.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique de l'avant d'un véhicule automobile en vue de côté,
[Fig 2] la figure 2 montre une représentation schématique en perspective et en coupe partielle de l'avant d'un véhicule automobile et d'un module de refroidissement,
[Fig 3] la figure 3 montre une représentation schématique en coupe de l'avant d'un véhicule automobile et d'un module de refroidissement selon un premier mode de fonctionnement,
[Fig 4] la figure 4 montre une représentation schématique en coupe de l'avant d'un véhicule automobile et d'un module de refroidissement selon un deuxième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations, en restant dans le cadre de l'invention tel que défini par les revendications.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un flux d'air. A contrario, on entend par « placé en aval » qu'un élément est placé après un autre par rapport au sens de circulation du flux d'air.

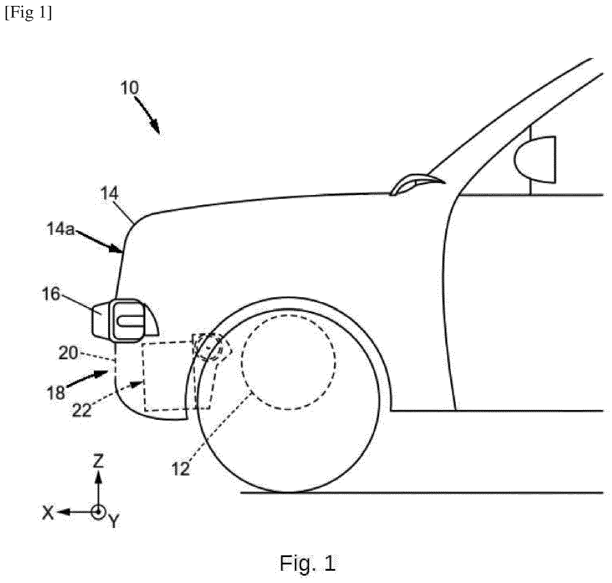

Sur les figures 1 à 4, est représenté un trièdre XYZ afin de définir l'orientation des différents éléments les uns des autres. Une première direction, notée X, correspond à une direction longitudinale du véhicule. Elle correspond également à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur les figures 1 à 4, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve de préférence en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

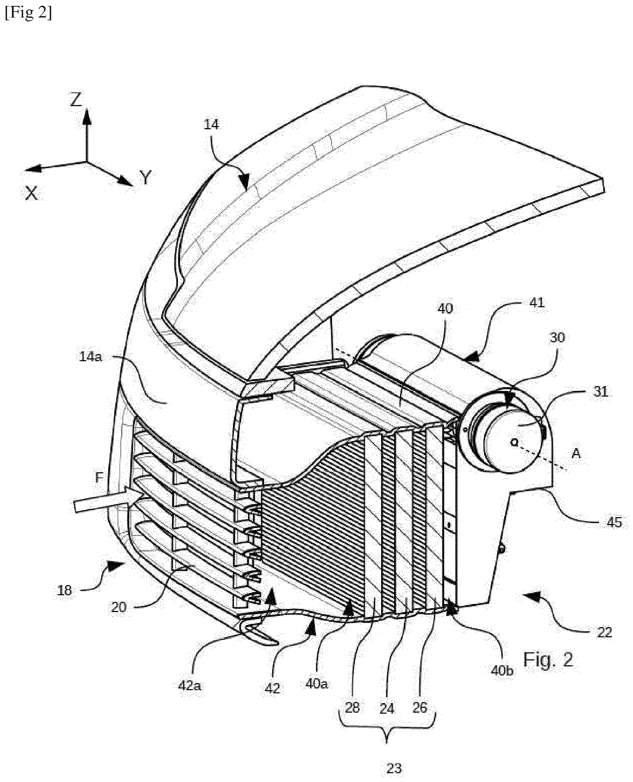

Comme le montrent les figures 2 à 4, le module de refroidissement 22 est destiné à être traversé par un flux d'air F parallèle à la direction X et allant de l'avant vers l'arrière du véhicule 10. Le module de refroidissement 22 comprend un ensemble d'échangeurs de chaleur 23. Cet ensemble d'échangeurs de chaleur 23 comporte au moins un premier échangeur de chaleur 24 et un deuxième échangeur de chaleur 26.

Le premier échangeur de chaleur 24 est notamment configuré pour absorber de l'énergie calorifique du flux d'air F. Ce premier échangeur de chaleur 24 peut plus particulièrement être un évaporateur d'une pompe à chaleur (non représenté) ou un évapo-condenseur d'un circuit de climatisation inversible (non représenté) apte à fonctionner dans un mode pompe à chaleur. Ce circuit de climatisation inversible peut également permettre le refroidissement des batteries du véhicule 10.

Le deuxième échangeur de chaleur 26 est quant à lui configuré pour relâcher de l'énergie calorifique dans le flux d'air F. Ce deuxième échangeur de chaleur 26 peut plus particulièrement être un radiateur connecté à un circuit de gestion thermique (non représenté) d'éléments électriques tel que le moteur électrique 12.

Le premier échangeur de chaleur 24 étant généralement un évapo-condenseur d'un circuit de climatisation inversible, ce dernier a besoin que le flux d'air F soit le plus « frais » possible en mode climatisation. Pour cela, le deuxième échangeur de chaleur 26 est de préférence disposé en aval du premier échangeur de chaleur 24 dans le sens de circulation du flux d'air F. Il est néanmoins tout à fait possible d'imaginer que le deuxième échangeur de chaleur 26 soit disposé en amont du premier échangeur de chaleur 24.

Dans l'exemple illustré aux figures 2 à 4, l'ensemble d'échangeurs de chaleur 23 comporte un troisième échangeur de chaleur 28 lui aussi configuré pour relâcher de l'énergie calorifique dans le flux d'air. Ce troisième échangeur de chaleur 28 peut plus particulièrement être un radiateur connecté à un circuit de gestion thermique (non représenté), pouvant être distinct de celui connecté au deuxième échangeur de chaleur 26, pour des éléments électriques tel que l'électronique de puissance. Il est également tout à fait possible d'imaginer que le deuxième 26 et le troisième 28 échangeur de chaleur soient connectés à un même circuit de gestion thermique, par exemple connectés en parallèle l'un de l'autre.

Toujours selon l'exemple illustré aux figures 2 à 4, le deuxième échangeur de chaleur 26 est disposé en aval du premier échangeur de chaleur 24 tandis que le troisième échangeur de chaleur 28 est disposé en amont du premier échangeur de chaleur 24. D'autres configurations peuvent néanmoins être envisageables comme par exemple les deuxième 26 et troisième 28 échangeurs de chaleurs disposés tous deux en aval ou en amont du premier échangeur de chaleur 24.

Sur le mode de réalisation illustré, chacun des échangeurs thermiques 24, 26, 28 présente une forme générale parallélépipédique déterminée par une longueur, une épaisseur et une hauteur. La longueur s'étend le long de la direction Y, l'épaisseur le long de la direction X et la hauteur dans la direction Z.

Le module de refroidissement 22 comporte essentiellement un boîtier ou carénage 40 formant un canal interne entre deux extrémités 40a, 40b opposées et à l'intérieur duquel est disposé l'ensemble d'échangeurs de chaleur 23. Ce canal interne est de préférence orienté parallèlement à la direction X de sorte que l'extrémité amont 40a est orientée vers l'avant du véhicule 10 en regard de la baie de refroidissement 18 et de sorte que l'extrémité aval 40b est orientée vers l'arrière du véhicule 10.

Le module de refroidissement 22 comporte également un premier boîtier collecteur 41 disposé en aval de l'ensemble d'échangeurs de chaleur 23 dans le sens de circulation du flux d'air. Ce premier boîtier collecteur 41comporte une sortie 45 du flux d'air F, Ce premier boîtier collecteur 41 permet ainsi de récupérer le flux d'air traversant l'ensemble d'échangeurs de chaleur 23 et d'orienter ce flux d'air vers la sortie 45. Le premier boîtier collecteur 41 peut venir de matière avec le carénage 40 ou bien être une pièce rapportée fixée à l'extrémité aval 40b dudit carénage 40.

Le module de refroidissement 22 comporte en outre une évacuation d'air 51 disposée en aval de la sortie 45 du flux d'air F du premier boîtier collecteur 41. Cette évacuation d'air 51 débouche sur l'extérieur du véhicule 10. Le module de refroidissement 22 comporte également une dérivation 55 reliant l'évacuation d'air 51 à une ouverture 42b débouchant en amont de l'ensemble d'échangeurs de chaleur 23. Cette dérivation 55 peut par exemple être un canal disposé en périphérie du module de refroidissement 22 reliant l'évacuation d'air 51 à l'amont de l'ensemble d'échangeurs de chaleur 23.

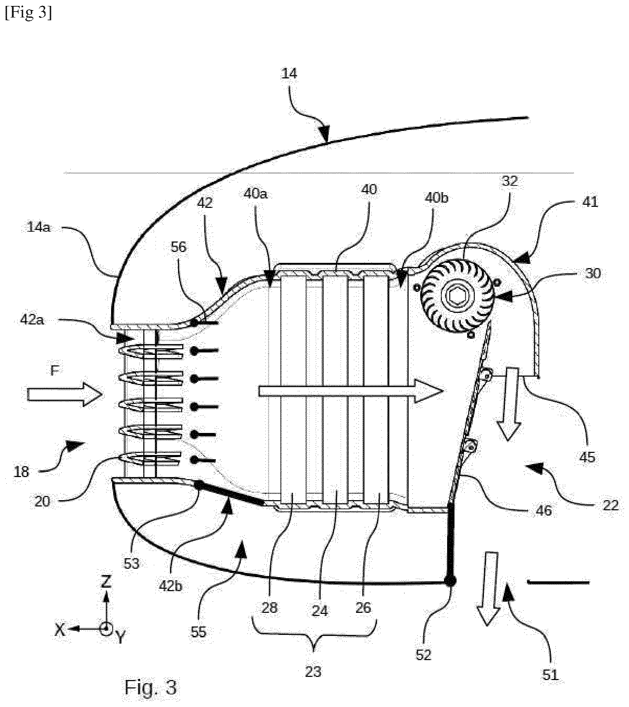

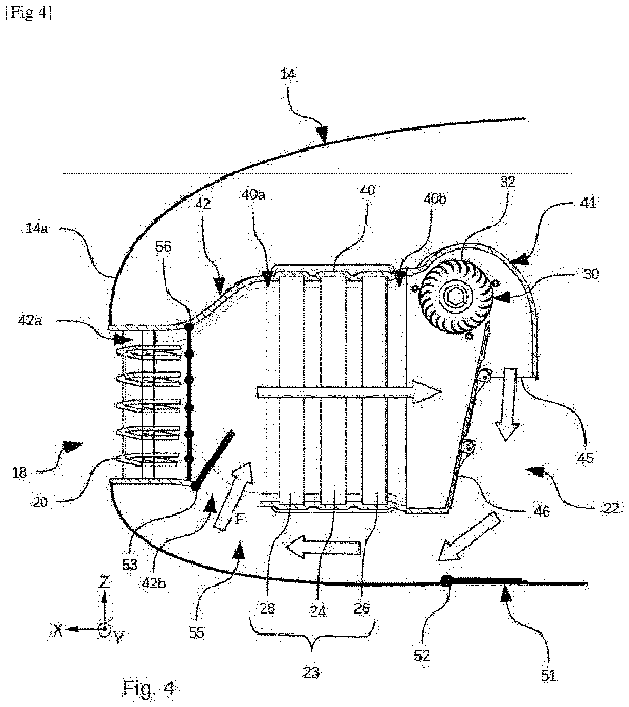

L'évacuation d'air 51 comporte plus particulièrement un premier dispositif d'obturation 52 mobile entre une première position dite d'évacuation et une deuxième position dite de recirculation. Ce premier dispositif d'obturation 52 est configuré pour rediriger le flux d'air F en provenance de la sortie 45 vers l'extérieur du véhicule 10 dans sa position d'évacuation (illustré à la figure 3) et pour rediriger le flux d'air F en provenance de la sortie 45 vers la dérivation 55 dans sa position de recirculation (illustré à la figure 4).

Cette configuration particulière permet ainsi d'évacuer l'air ayant traversé l'ensemble d'échangeurs de chaleur 23 vers l'extérieur via l'évacuation d'air 51 lorsque le premier dispositif d'obturation 52 est dans sa position d'évacuation.

Dans sa position de recirculation, le dispositif d'obturation permet une redirection d'au moins une partie du flux d'air F en provenance de la sortie 45 vers l'amont de l'ensemble d'échangeurs de chaleur 23. Cela est particulièrement avantageux par temps froid lorsque le premier échangeur de chaleur 24 est couplé à une pompe à chaleur ou à un circuit de climatisation fonctionnant en mode pompe à chaleur et joue le rôle d'un évaporateur. En effet, lorsque le premier échangeur de chaleur 24 joue le rôle d'un évaporateur par temps froid, l'humidité de l'air peut se condenser sur le premier échangeur de chaleur 24 et givrer. Le flux d'air F ayant traversé l'ensemble d'échangeurs de chaleur 23, et donc ayant traversé le deuxième échangeur de chaleur 26, est potentiellement plus chaud que le flux d'air F venant de l'extérieur du véhicule 10. Le flux d'air F recirculé peut ainsi permettre de faire fondre le givre s'étant formé sur le premier échangeur de chaleur 24. Cela est particulièrement efficace lorsque le deuxième échangeur de chaleur 26 est disposé en aval du premier échangeur de chaleur 24.

Le premier dispositif d'obturation 52 peut notamment être configuré pour obturer la dérivation 55 dans sa position d'évacuation de sorte que l'ensemble du flux d'air F en provenance de la sortie 45 soir redirigé vers l'évacuation d'air 51. Le premier dispositif d'obturation 52 peut par exemple être un volet drapeau comme illustré sur les figures 3 et 4. Il peut également être un autre type de volet connu de l'homme du métier et pouvant remplir la même fonction, comme par exemple un volet dit papillon ou encore un volet tambour.

Afin de faciliter la circulation du flux d'air, notamment lorsque le premier dispositif d'obturation 52 est dans sa position d'évacuation, l'évacuation d'air 51 est de préférence disposée dans le même axe que la sortie du flux d'air 45 du premier boîtier collecteur 41.

Le premier boîtier collecteur 41 peut également comporter au moins un volet de décharge 46 disposé en regard de l'ensemble d'échangeurs de chaleurs 23 dans l'axe de circulation du flux d'air F le traversant. Sur les figures 3 et 4, le premier boîtier collecteur 41 comporte plus précisément deux volets de décharge 46. Cela permet au flux d'air de traverser le premier boîtier collecteur 41 sans passer par la sortie 45 dans le cas d'un flux d'air F d'un fort débit, par exemple lorsque le véhicule automobile est en roulage au-delà d'une certaine vitesse.

Le module de refroidissement 22 comprend également au moins un ventilateur tangentiel, aussi nommé turbomachine tangentielle 30 configuré de sorte générer le flux d'air F à destination de l'ensemble d'échangeurs de chaleur 23. La turbomachine tangentielle 30 comprend un rotor ou turbine 32 (ou hélice tangentielle). La turbine 32 a une forme sensiblement cylindrique. La turbine 32 comporte avantageusement plusieurs étages de pales (ou aubes), visibles sur les figures 3 et 4. La turbine 32 est montée rotative autour d'un axe de rotation A, par exemple parallèle à la direction Y. Le diamètre de la turbine 32 est par exemple compris entre 35 mm et 200 mm pour limiter sa taille. La turbomachine 28 est ainsi compacte.

La turbomachine tangentielle 30 peut également comporter un moteur 31 (visible sur la figure 2) configuré pour mettre en rotation la turbine 32. Le moteur 31 est par exemple adapté à entraîner la turbine 32 en rotation, à une vitesse comprise entre 200 tour/min et 14 000 tour/min. Ceci permet notamment de limiter le bruit généré par la turbomachine tangentielle 30.

La turbomachine tangentielle 30 est de préférence disposée dans le premier boîtier collecteur 41. La turbomachine tangentielle 30 est alors configurée pour aspirer de l'air afin de générer le flux d'air F traversant l'ensemble d'échangeurs de chaleur 23. Le premier boîtier collecteur 41 forme alors une volute au centre de laquelle est disposée la turbine 32 et dont l'évacuation d'air à la sortie 45 du premier boîtier collecteur 41 permet la sortie du flux d'air F.

Dans l'exemple illustré aux figures 2 à 4, la turbomachine tangentielle 30 est dans une position haute, notamment dans le tiers supérieur du premier boîtier collecteur 41, de manière préférée dans le quart supérieur du premier boîtier collecteur 41. Ceci permet notamment de protéger la turbomachine tangentielle en cas de submersion et/ou de limiter l'encombrement du module de refroidissement 22 dans sa partie basse.

Il est néanmoins possible d'imaginer que la turbomachine tangentielle 30 soit dans une position basse, notamment dans le tiers inférieur du premier boîtier collecteur 41. Cela permettrait de limiter l'encombrement du module de refroidissement 22 dans sa partie haute. Alternativement, la turbomachine tangentielle 30 peut être dans une position médiane, notamment dans le tiers médian de la hauteur du premier boîtier collecteur 41, par exemple pour des raisons d'intégration du module de refroidissement 22 dans son environnement.

En outre, dans les exemples illustrés, la turbomachine tangentielle 30 fonctionne en aspiration, c'est-à-dire qu'elle aspire l'air ambiant pour qu'il traverse l'ensemble d'échangeurs de chaleur 23. Alternativement, la turbomachine tangentielle 30 peut fonctionner par soufflage, soufflant l'air vers l'ensemble d'échangeurs de chaleur 23. Pour cela, la turbomachine tangentielle 30 sera disposée en amont de l'ensemble d'échangeurs de chaleur 23.

Le module de refroidissement 22 peut également comporter un deuxième boîtier collecteur 42 disposé en amont de l'ensemble d'échangeurs de chaleur 23. Ce deuxième boîtier collecteur 42 comporte une première entrée 42a du flux d'air F en provenance de l'extérieur du véhicule 10 et une deuxième entrée du flux d'air F en provenance de la dérivation 55 formant l'ouverture 42b de la dérivation 55. La première entrée 42a peut notamment être disposée en regarde de la baie de refroidissement 18. Cette première entrée 42a peut également comporter la grille 20 de protection. Le deuxième boîtier collecteur 42 peut venir de matière avec le carénage 40 ou bien être une pièce rapportée fixée à l'extrémité amont 40a dudit carénage 40.

De plus, la première entrée 42a du deuxième boîtier collecteur 42 peut comporter un dispositif d'obturation de face avant 56 mobile entre une première position dite ouverte et une deuxième position dite d'obturation. Ce dispositif d'obturation de face avant 56 est notamment configuré pour permettre au flux d'air F en provenance de l'extérieur du véhicule 10 de passer au travers ladite première entrée 42a dans sa position ouverte (illustré à la figure 3) et obturer ladite première entrée du flux d'air 42a dans sa position d'obturation (illustré à la figure 4). Le dispositif d'obturation de face avant 56 est notamment configuré pour être dans sa position d'obturation lorsque le premier dispositif d'obturation 52 est dans sa position de recirculation. Ainsi dans ce cas de figure, seul le flux d'air F recirculé en provenance de la dérivation 55 traverse l'ensemble d'échangeurs de chaleur 23 ce qui renforce l'effet dégivrant.

Le dispositif d'obturation de face avant 56 peut se présenter sous différentes formes comme par exemple sous la forme d'une pluralité de volets montés pivotants entre une position d'ouverture et une position de fermeture. Sur le mode de réalisation illustré aux figures 3 et 4, les volets sont montés parallèles à la direction Y. Néanmoins, il est tout à fait possible d'imaginer d'autres configurations comme par exemple des volets montés parallèles à la direction Z. Les volets illustré sont des volets de type drapeau mais d'autres types de volets comme des volets papillons sont tout à fait envisageables.

La deuxième entrée 42b du deuxième boîtier collecteur 42 peut quant à elle se présenter comme une ouverture réalisée dans la paroi du deuxième boîtier collecteur 42 et dans laquelle débouche la dérivation 55. Cette deuxième entrée 42b peut comporter un deuxième dispositif d'obturation 53 mobile entre une première position dite d'ouverture et une deuxième position dite de fermeture Ce deuxième dispositif d'obturation 53 est notamment configuré pour rediriger le flux d'air en provenance de la dérivation 55 vers l'ensemble d'échangeurs de chaleur 23 dans sa position d'ouverture et configuré pour obturer la deuxième entrée 42b dans sa position de fermeture.

Ainsi, lorsque le premier dispositif d'obturation 52 est dans sa position d'évacuation et le deuxième dispositif d'obturation 53 est dans sa position de fermeture, seul le flux d'air F en provenance de la première entrée 42a peut traverser l'ensemble d'échangeurs de chaleur 23, comme illustré sur la figure 3. A contrario, lorsque le premier dispositif d'obturation 52 est dans sa position de recirculation et le deuxième dispositif d'obturation 53 est dans sa position d'ouverture, le flux d'air F en provenance de la dérivation 55 peut traverser l'ensemble d'échangeurs de chaleur 23, comme illustré sur la figure 4.

De préférence lorsque le deuxième dispositif d'obturation 53 est dans sa position d'ouverture, le dispositif d'obturation de face avant 56 est dans sa position d'obturation. Lorsque le deuxième dispositif d'obturation 53 est dans sa position de fermeture, le dispositif d'obturation de face avant 56 est dans sa position ouverte.

Ce deuxième dispositif d'obturation 53 peut par exemple être un volet drapeau comme illustré sur les figures 3 et 4. Il peut également être un autre type de volet connu de l'homme du métier et pouvant remplir la même fonction, comme par exemple un volet dit papillon ou encore un volet tambour.

Ainsi, on voit bien que la présente invention de par la présence de cette dérivation 55 et du premier dispositif d'obturation 52 permet de faire recirculer un flux d'air F ayant été réchauffé au niveau du deuxième échangeur de chaleur 26 afin de faire fondre du givre s'étant formé sur le premier échangeur de chaleur 24 lorsque ce dernier fonctionne en mode pompe à chaleur.

## Revendications

1. Module de refroidissement (22) pour véhicule automobile (10) électrique ou hybride, ledit module de refroidissement (22) étant destiné à être traversé par un flux d'air (F) et comportant :
• un ensemble d'échangeurs de chaleur (23) comportant un premier échangeur de chaleur (24) configuré pour absorber de l'énergie calorifique du flux d'air (F) et un deuxième échangeur de chaleur (26) configuré pour relâcher de l'énergie calorifique dans le flux d'air (F),
• un premier boîtier colleteur (41) disposé en aval de l'ensemble d'échangeurs de chaleur (23) dans le sens de circulation du flux d'air (F) , ledit premier boîtier collecteur (41) comportant une sortie (45) du flux d'air (F),
• une turbomachine tangentielle (30) configurée de sorte à générer le flux d'air (F),
**caractérisé en ce que** le module de refroidissement (22) comporte en outre :
• une évacuation d'air (51) disposée en aval de la sortie (45) du flux d'air (F) du premier boîtier collecteur (41), ladite évacuation d'air (51) débouchant sur l'extérieur du véhicule (10), et
• une dérivation (55) reliant la sortie du flux d'air (45) à une ouverture (42b) débouchant en amont de l'ensemble d'échangeurs de chaleur (23),
l'évacuation d'air (51) comportant un premier dispositif d'obturation (52) mobile entre une première position dite d'évacuation et une deuxième position dite de recirculation, ledit premier dispositif d'obturation (52) étant configuré pour rediriger le flux d'air (F) en provenance de la sortie (45) vers l'extérieur du véhicule (10) dans sa position d'évacuation et pour rediriger ledit flux d'air (F) vers la dérivation (55) dans sa position de recirculation.

2. Module de refroidissement (22) selon la revendication précédente, **caractérisé en ce qu'**en position d'évacuation, le premier dispositif d'obturation (52) obture la dérivation (55).

3. Module de refroidissement (22) selon l'une quelconque des revendications précédentes, **caractérisé en ce qu'**il comporte en outre un deuxième boîtier collecteur (42) disposé en amont de l'ensemble d'échangeurs de chaleur (23), ledit deuxième boîtier collecteur (42) comportant une première entrée (42a) du flux d'air (F) en provenance de l'extérieur du véhicule (10) et une deuxième entrée du flux d'air (F) en provenance de la dérivation (55) formant l'ouverture (42b) de la dérivation (55).

4. Module de refroidissement (22) selon la revendication précédente, **caractérisé en ce que** la deuxième entrée (42b) du deuxième boîtier collecteur (41) comporte un deuxième dispositif d'obturation (53) mobile entre une première position dite d'ouverture et une deuxième position dite de fermeture, le deuxième dispositif d'obturation (53) étant configuré pour rediriger le flux d'air (F) en provenance de la dérivation (55) vers l'ensemble d'échangeurs de chaleur (23) dans sa position d'ouverture et configuré pour obturer la deuxième entrée (42b) dans sa position de fermeture.

5. Module de refroidissement (22) selon l'une quelconque des revendications 3 à 5, **caractérisé en ce que** la première entrée (42a) du flux d'air (F) du deuxième boîtier collecteur (42) comporte un dispositif d'obturation de face avant (56) mobile entre une première position dite ouverte et une deuxième position dite d'obturation, le dispositif d'obturation de face avant (56) étant configuré pour permettre au flux d'air (F) en provenance de l'extérieur du véhicule (10) de passer au travers ladite première entrée (42a) dans sa position ouverte et obturer ladite première entrée (42a) dans sa position d'obturation.

6. Module de refroidissement (22) selon l'une quelconque des revendications précédentes **caractérisé en ce que** l'ensemble d'échangeurs de chaleur (23) comporte un troisième échangeur de chaleur (28) configuré pour relâcher de l'énergie calorifique dans le flux d'air (F).

7. Module de refroidissement (22) selon la revendication précédente, **caractérisé en ce que** le troisième échangeur de chaleur (28) est disposé en amont du premier échangeur de chaleur (24).

8. Module de refroidissement (22) selon l'une quelconque des revendications précédentes **caractérisé en ce que** le deuxième échangeur de chaleur (26) est disposé en aval du premier échangeur de chaleur (24).

9. Module de refroidissement (22) selon l'une quelconque des revendications précédentes **caractérisé en ce que** le premier boîtier collecteur (41) comporte au moins un volet de décharge (46) disposé en vis-à-vis de l'ensemble d'échangeurs de chaleur (23) dans l'axe de circulation du flux d'air (F) le traversant.

10. Module de refroidissement (22) selon l'une quelconque des revendications précédentes **caractérisé en ce que** l'évacuation d'air (51) est disposée dans le même axe que la sortie (45) du flux d'air (F) du premier boîtier collecteur (41).

## Patentansprüche

1. Kühlmodul (22) für ein Elektro- oder Hybridkraftfahrzeug (10), wobei das Kühlmodul (22) dazu bestimmt ist, von einem Luftstrom (F) durchströmt zu werden, und Folgendes aufweist:
• eine Wärmetauscheranordnung (23) mit einem ersten Wärmetauscher (24), der dazu konfiguriert ist, Wärmeenergie aus dem Luftstrom (F) zu absorbieren, und einem zweiten Wärmetauscher (26), der dazu konfiguriert ist, Wärmeenergie in den Luftstrom (F) abzugeben,
• ein erstes Sammelgehäuse (41), das in Strömungsrichtung des Luftstroms (F) stromabwärts der Wärmetauscheranordnung (23) angeordnet ist, wobei das erste Sammelgehäuse (41) einen Auslass (45) für den Luftstrom (F) aufweist,
• eine tangentiale Turbomaschine (30), die so konfiguriert ist, dass sie den Luftstrom (F) erzeugt, **dadurch gekennzeichnet, dass** das Kühlmodul (22) ferner Folgendes aufweist:
• einen Luftauslass (51), der stromabwärts des Auslasses (45) des Luftstroms (F) aus dem ersten Sammelgehäuse (41) angeordnet ist, wobei der Luftauslass (51) nach außerhalb des Fahrzeugs (10) mündet, und
• einen Bypass (55), der den Auslass des Luftstroms (45) mit einer Öffnung (42b) verbindet, die stromaufwärts der Wärmetauscheranordnung (23) mündet,
wobei der Luftauslass (51) eine erste Verschlussvorrichtung (52) aufweist, die zwischen einer als Auslassposition bezeichneten ersten Position und einer als Umluftposition bezeichneten zweiten Position bewegbar ist, wobei die erste Verschlussvorrichtung (52) dazu konfiguriert ist, in ihrer Auslassposition den vom Auslass (45) kommenden Luftstrom (F) nach außerhalb des Fahrzeugs (10) zu lenken und in ihrer Umluftposition den Luftstrom (F) zum Bypass (55) zu lenken.

2. Kühlmodul (22) nach dem vorangehenden Anspruch, **dadurch gekennzeichnet, dass** die erste Verschlussvorrichtung (52) in der Auslassposition den Bypass (55) verschließt.

3. Kühlmodul (22) nach einem der vorangehenden Ansprüche, **dadurch gekennzeichnet, dass** es ferner ein zweites Sammelgehäuse (42) aufweist, das stromaufwärts der Wärmetauscheranordnung (23) angeordnet ist, wobei das zweite Sammelgehäuse (42) einen ersten Einlass (42a) des von außerhalb des Fahrzeugs (10) kommenden Luftstroms (F) und einen zweiten Einlass des vom Bypass (55) kommenden Luftstroms (F), der die Öffnung (42b) des Bypasses (55) bildet, aufweist.

4. Kühlmodul (22) nach dem vorangehenden Anspruch, **dadurch gekennzeichnet, dass** der zweite Einlass (42b) des zweiten Sammelgehäuses (41) eine zweite Verschlussvorrichtung (53) aufweist, die zwischen einer als Öffnungsposition bezeichneten ersten Position und einer als Schließposition bezeichneten zweiten Position bewegbar ist, wobei die zweite Verschlussvorrichtung (53) dazu konfiguriert ist, in ihrer Öffnungsposition den vom Bypass (55) kommenden Luftstrom (F) zur Wärmetauscheranordnung (23) zu lenken, und dazu konfiguriert ist, in ihrer Schließposition den zweiten Einlass (42b) zu verschließen.

5. Kühlmodul (22) nach einem der Ansprüche 3 bis 5, **dadurch gekennzeichnet, dass** der erste Einlass (42a) des Luftstroms (F) des zweiten Sammelgehäuses (42) eine vorderseitige Verschlussvorrichtung (56) aufweist, die zwischen einer als Öffnungsposition bezeichneten ersten Position und einer als Verschlussposition bezeichneten zweiten Position bewegbar ist, wobei die vorderseitige Verschlussvorrichtung (56) dazu konfiguriert ist, in ihrer Öffnungsposition dem von außerhalb des Fahrzeugs (10) kommenden Luftstrom (F) zu erlauben, durch den ersten Einlass (42a) zu strömen, und in ihrer Verschlussposition den ersten Einlass (42a) verschließt.

6. Kühlmodul (22) nach einem der vorangehenden Ansprüche, **dadurch gekennzeichnet, dass** die Wärmetauscheranordnung (23) einen dritten Wärmetauscher (28) aufweist, der dazu konfiguriert ist, die Wärmeenergie in den Luftstrom (F) abzugeben.

7. Kühlmodul (22) nach dem vorangehenden Anspruch, **dadurch gekennzeichnet, dass** der dritte Wärmetauscher (28) stromaufwärts des ersten Wärmetauschers (24) angeordnet ist.

8. Kühlmodul (22) nach einem der vorangehenden Ansprüche **dadurch gekennzeichnet, dass** der zweite Wärmetauscher (26) stromabwärts des ersten Wärmetauschers (24) angeordnet ist.

9. Kühlmodul (22) nach einem der vorangehenden Ansprüche **dadurch gekennzeichnet, dass** das erste Sammelgehäuse (41) mindestens eine Entlastungsklappe (46) aufweist, die gegenüber der Wärmetauscheranordnung (23) in der Zirkulationsachse des sie durchströmenden Luftstroms (F) angeordnet ist.

10. Kühlmodul (22) nach einem der vorangehenden Ansprüche **dadurch gekennzeichnet, dass** der Luftauslass (51) in derselben Achse wie der Auslass (45) des Luftstroms (F) aus dem ersten Sammelgehäuse (41) angeordnet ist.

## Claims

1. Cooling module (22) for an electric or hybrid motor vehicle (10), said cooling module (22) being intended to have an air flow (F) passing through it and having:
• a set of heat exchangers (23) having a first heat exchanger (24) configured to absorb heat energy from the air flow (F) and a second heat exchanger (26) configured to release heat energy into the air flow (F),
• a first header housing (41) disposed downstream of the set of heat exchangers (23) in the direction of circulation of the air flow (F), said first header housing (41) having an outlet (45) for the air flow (F),
• a tangential-flow turbomachine (30) configured so as to generate the air flow (F),
**characterized in that** the cooling module (22) also has:
• an air evacuation means (51) disposed downstream of the outlet (45) for the air flow (F) of the first header housing (41), said air evacuation means (51) emerging outside the vehicle (10), and
• a bypass (55) connecting the outlet for the air flow (45) to an opening (42b) emerging upstream of the set of heat exchangers (23),
the air evacuation means (51) having a first shut-off device (52) that is able to move between a first position, known as the evacuation position, and a second position, known as the recirculation position, said first shut-off device (52) being configured to redirect the air flow (F) coming from the outlet (45) toward the outside of the vehicle (10) in its evacuation position and to redirect said air flow (F) toward the bypass (55) in its recirculation position.

2. Cooling module (22) according to the preceding claim, **characterized in that**, in the evacuation position, the first shut-off device (52) shuts off the bypass (55).

3. Cooling module (22) according to either one of the preceding claims, **characterized in that** it also has a second header housing (42) disposed upstream of the set of heat exchangers (23), said second header housing (42) having a first inlet (42a) for the air flow (F) coming from outside the vehicle (10) and a second inlet for the air flow (F) coming from the bypass (55) forming the opening (42b) of the bypass (55).

4. Cooling module (22) according to the preceding claim, **characterized in that** the second inlet (42b) of the second header housing (41) has a second shut-off device (53) that is able to move between a first position, known as the opening position, and a second position, known as the closing position, the second shut-off device (53) being configured to redirect the air flow (F) coming from the bypass (55) toward the set of heat exchangers (23) in its opening position and configured to shut off the second inlet (42b) in its closing position.

5. Cooling module (22) according to any one of Claims 3 to 5, **characterized in that** the first inlet (42a) for the air flow (F) of the second header housing (42) has a front face shut-off device (56) that is able to move between a first position, known as the open position, and a second position, known as the shut-off position, the front face shut-off device (56) being configured to allow the air flow (F) coming from outside the vehicle (10) to pass through said first inlet (42a) in its open position and shut off said first inlet (42a) in its shut-off position.

6. Cooling module (22) according to any one of the preceding claims, **characterized in that** the set of heat exchangers (23) has a third heat exchanger (28) configured to release heat energy into the air flow (F).

7. Cooling module (22) according to the preceding claim, **characterized in that** the third heat exchanger (28) is disposed upstream of the first heat exchanger (24) .

8. Cooling module (22) according to any one of the preceding claims, **characterized in that** the second heat exchanger (26) is disposed downstream of the first heat exchanger (24).

9. Cooling module (22) according to any one of the preceding claims, **characterized in that** the first header housing (41) has at least one discharge flap (46) disposed facing the set of heat exchangers (23) along the axis of circulation of the air flow (F) passing through it.

10. Cooling module (22) according to any one of the preceding claims, **characterized in that** the air evacuation means (51) is disposed along the same axis as the outlet (45) for the air flow (F) of the first header housing (41).
